**Europäisches Patentamt**

**European Patent Office**

**Office européen des brevets**

(11) Veröffentlichungsnummer: **0 356 719**

**A1**

(12) **EUROPÄISCHE PATENTANMELDUNG**

(21) Anmeldenummer: **89113984.2**

(22) Anmeldetag: **28.07.89**

(51) Int. Cl.5: **E04F 17/02 , F16L 13/10 , F23J 13/04**

(30) Priorität: **29.07.88 DE 3825964**

(43) Veröffentlichungstag der Anmeldung:
**07.03.90 Patentblatt 90/10**

(84) Benannte Vertragsstaaten:
**AT CH DE FR IT LI NL**

(71) Anmelder: **Schiedel GmbH & Co.**
**Lerchenstrasse 9**
**D-8000 München 50(DE)**

(72) Erfinder: **Münz, Werner, Dipl.-Ing.**
**Weissdornweg 8**
**D-8056 Neufahrn(DE)**
Erfinder: **Wengenroth, Ulrich**
**Eichelhäherstrasse 42**
**D-8000 München 60(DE)**

(74) Vertreter: **Jung, Elisabeth, Dr. et al**
**Dr. Elisabeth Jung Dr. Jürgen Schirdewahn**
**Dipl.-Ing. Claus Gernhardt Patentanwälte**
**Clemensstrasse 30 Postfach 40 14 68**
**D-8000 München 40(DE)**

(54) **Bausatz zur Herstellung eines Rauchgasrohres eines mehrschaligen Schornsteins und Anwendungen.**

(57) Die Erfindung bezieht sich auf einen Bausatz aus Einzelrohren (2) und Außendichtungen (12) zur Herstellung eines Rauchgasrohres eines mehrschaligen Schornsteins aus den sich zum Rauchgasrohr axial ergänzenden Einzelrohren (2) und Außendichtungen (12), welche die Fugen (6) zwischen den Einzelrohren (2) überbrücken. Die Erfindung sieht bei diesem Bausatz vor, daß die Außendichtungen (12) nachgiebige Dichtringe (14) und Stützhülsen (16) für diese aufweisen, deren lichter Innenquerschnitt größer als der Außenquerschnitt der Einzelrohre (2) ist, und daß die Dichtringe (14), ihre Stützhülsen (16) und die Einzelrohre (2) so relativ zueinander bemessen sind, daß die Dichtringe (14) unter- und oberhalb der Fuge (6) zwischen aufeinander folgenden Einzelrohren (2) zwischen deren Außenmantelfläche (18) und der Stützhülse (16) einklemmbar sind. Die Erfindung betrifft ferner Anwendungen eines solchen Bausatzes.

FIG.1

## Bausatz zur Herstellung eines Rauchgasrohres eines mehrschaligen Schornsteins und Anwendungen

Die Erfindung bezieht sich auf einen Bausatz aus Einzelrohren und Außendichtungen zur Herstellung eines Rauchgasrohres eines mehrschaligen Schornsteins mit den Merkmalen des Oberbegriffs von Anspruch 1. Ein solcher Bausatz ist aus der DE-A1-34 30 851 an sich bekannt.

In der DE-A1-34 30 851 ist das Problem angesprochen, daß in konventioneller Weise vermörtelte Einzelrohre eines Rauchgasrohres keine hinreichende Feuchtigkeitsdichtung gegen Wasser und Wasserdampf bilden. Zur Vermeidung dieser Tatsache ist dort bei dem das innere Rauchgasrohr eines mehrschaligen Kamins bildenden Innenrohrstrang vorgesehen, daß auf der Innenseite und/oder Außenseite des Innenrohrstranges an einer Innenrohrstoßfuge eine wasser- bzw. wasserdampfundurchlässige Manschette angeordnet ist, die insbesondere aus Edelstahl oder Polytetrafluoräthylen besteht, wobei im Falle beidseitig angeordneter Manschetten diese durch die Stoßfuge hindurch durch einen gemeinsamen Steg verbunden sind. Diese die konventionelle Vermörtelung ersetzende Manschettenanordnung soll sich dabei dicht an die Innen- bzw. Außenmantelfläche der Einzelrohre anschließen und mit diesen unmittelbar über einen Klebstoff oder mittelbar über einen Klebstreifen fest verbunden sein. Eine solche Fugenüberbrückung bietet jedoch dann Probleme, wenn die Einzelrohre des Rauchgasstranges nicht formkonstant gefertigt und versetzt werden können, wie dies z.B. bei keramischen Rohren einschließlich Schamotterohren regelmäßig der Fall ist. Dann dürfte ein Klebstoff im Regelfall kaum in der Lage sein, die Formungleichmäßigkeiten zwischen den Einzelrohren und der Manschette auszugleichen, und die Verwendung von alternativ in Betracht gezogenen Klebstreifen erscheint unpraktikabel, da Klebstreifen innerhalb eines mehrschaligen Schornsteins schwer montieren und außerdem unzuverlässig sind. Dementsprechend ist in der DE-A1-34 30 851 auch ausdrücklich angesprochen, daß die Einzelrohre und die Manschetten relativ zueinander durch ein montagemäßig sehr aufwendiges relatives Eindrehen verbunden werden sollen.

Die DE-C2-33 17 661 befaßt sich ferner mit einem Rauchgasrohr eines mehrschaligen Schornsteins, bei dem das Rauchgasrohr aus speziellen dünnwandigen keramischen Einzelrohren zusammengesetzt wird. Um dabei die Dichtwirkung konventionellen Kitts zu verbessern, ist dieser auch noch radial außerhalb des Rauchgasrohres mit Hilfe einer gesonderten Kittmanschette gehalten, wodurch der Kriechweg für Feuchtigkeit längs der Fuge verlängert wird Damit ist jedoch den schlechten Dichtwirkungen konventionellen Kitts gegen aggressive Feuchtigkeit nicht grundsätzlich abgeholfen. Außerdem besteht die Gefahr, daß insbesondere der Außerhalb des eingentlichen Rauchgasrohres von der Dichtmanschette gehaltene Mörtel unter den thermischen Bewegungen des Rauchgasrohres reißt und ausbröckelt.

Der Erfindung liegt demgegenüber die Aufgabe zugrunde, einen Bausatz der eingangs erwähnten Art anzugeben, der folgende Eigenschaften vereint:
- dauerhafte Feuchtigkeitsdichtigkeit der Fugen zwischen den Einzelrohren des Rauchgasrohres mindestens für Niedertemperaturbetrieb mit Kondensatbildung;
- problemlose Anwendbarkeit für dünnwandige einschalige Rauchgasrohre;
- einfache Montage;
- Anpassungsfähigkeit an Außen- und Ausrichtungstoleranzen von jeweils eine Fuge bildenden benachbarten Einzelrohren; und
- Ausbaubarkeit auch für Schornsteine mit Hochtemperaturfeuerstätten.

Diese Aufgabe wird bei einem Bausatz mit den eingangs genannten Merkmalen durch die kennzeichnenden Merkmale von Anspruch 1 gelöst.

Mittels der eingeklemmt gehaltenen nachgiebigen Dichtringe läßt sich eine zuverlässige dauerhafte Fugendichtung. für Schornsteine mit Niedertemperaturfeuerstätten gegen säurehaltige und daher aggressive Kondensate und entsprechende Dämpfe aus dem Rauchgas erreichen. Die Nachgiebigkeit der Dichtringe läßt sich dabei so bemessen, daß Außenkonturtoleranzen der an der Fuge aneinander anschließenden Einzelrohre ausgeglichen werden können. Außerdem können diese dabei auch bei Fluchtungsfehlern gelenkartig aneinander angeschlossen werden. Wie in den beiden genannten bekannten Fällen werden zwar auch die Elemente des Bausatzes relativ aufeinander angepaßt; es ist jedoch nicht mehr eine solche Maßgerechtigkeit erforderlich wie bisher, daß sich ein Ausgleich über die Nachgiebigkeit der Dichtringe selbsttätig ergibt. Ein relativ aufwendiges Anschließen von Manschetten an den Außenumfang der Einzelrohre, wie etwa durch Eindrehen, ist dabei von vorneherein entbehrlich. Es ist dabei möglich, auf eine chemisch wirksame Verbindung von Außendichtmitteln mit der Außenfläche der Einzelrohre, wie etwa auf ein Verkleben, gänzlich zu verzichten, da die Dichtung auch bei einfachem mechanischen Einklemmen der Dichtringe wirksam ist. Das schließt nicht aus, daß man das Material der Dichtringe in Weiterbildung auch so gestalten kann, daß es auch zu chemischen Bindungen mit der Außenfläche der Einzelrohre und/oder der Stützhülse kommt. Es ist dabei eine zuverlässige Fugendichtung gegen korrosive Feuchtigkeit auch für sehr dünnwandige Rauchgasrohre möglich, selbst für solche aus Einzelrohren, deren Wandstärke für die Anordnung auch nur einer zuverlässigen Fugendichtung zwischen den fugenbildenden Stirnseiten nicht mehr ausreicht, z.B. bei dünnwandigen Einzelrohren aus Stahl, Glas oder Keramik. Für Schornsteine nur mit Niedertemperaturfeuerstätten kann dabei die Außendichtung die einzige Dichtung sein und im Grundsatz die Fuge sogar selbst völlig frei von Dichtmitteln gehalten sein. Dies gilt insbesondere für Anwendungen auf die Herstellung von Abgasleitungen, die im Inneren mit Überdruck beaufschlagt werden. Man kann aber insbesondere auch einen Ausbau für Schornsteine mit Hochtemperaturfeuerstätten vorsehen, indem der erfindungsgemäße Bausatz in Verbindung mit einer in den Fugen zwischen den Einzelrohren angeordneten zusätzlichen Fugendichtung angewendet wird. Die zusätzliche Fugendichtung kann dabei beispielsweise ein üblicher säurefester Fugenkitt sein, der im ausgehärteten Zustand hochtemperaturfest, säurebeständig und fugenabstandshaltend ist.

Da die Stützhülse bei runden Rauchgasrohren mit radialem und bei unrunden Rauchgasrohren, insbesondere rechteckigen Rauchgasrohren, entsprechend mit umlaufendem Abstand zum Rauchgasrohr angeordnet ist, kann man für die zusätzliche Fugendichtung auch noch den Raum zwischen den montierten Dichtungen einerseits sowie dem Rauchgasrohr und der Stützhülse andererseits mindestens teilweise erfüllen und so für die zusätzliche Fugendichtung mit nutzbar machen.

Insbesondere, aber nicht ausschließlich, kann dabei die zusätzliche Fugendichtung so ausgebildet sein, wie dies in den gleichzeitig von derselben Anmelderin eingereichten Patentanmeldungen P .. .. ... (u.Z.: T 614 M) mit dem Titel "Fugendichtung für ein Rauchgasrohr eines mehrschaligen Schornsteins und Anwendungen" und P .. .. ... (u.Z.: T 634 M) mit dem Titel "Bausatz aus Fugendichtungen und Einzelrohren für ein Rauchgasrohr eines mehrschaligen Schornsteins und Anwendungen" beschrieben ist. In diesem Fall kann die erfindungsgemäße Außendichtung noch als Zusatzmaßnahme vorgesehen sein, wenn sich dies in besonderen Anwendungsfällen als zweckmäßig erweist. Die erfindungsgemäße Stützhülse kann dabei im Grenzfall auch noch als "Stützkorsett" im Sinne der beiden genannten Parallelanmeldungen vorgesehen werden.

Wenn man einen derartigen Ausbau des erfindungsgemäßen Bausatzes im Sinne der Ansprüche 35 und/oder 36 vorsieht, kann dieselbe Fugenverbindung für Schornsteine mit Hochtemperatur-und mit Niedertemperaturfeuerstätten Anwendung finden. Bei Anwendung für Hochtemperaturfeuerstätten kommt es dabei nicht oder nur in relativ geringem Maße zu Taupunktunterschreitungen im Rauchgasrohr, so daß die Abdichtung gegen aggressive Feuchtigkeit sekundär wird. Dann kann man es sogar in Kauf nehmen, daß die betreffende Abdichtung während des Betriebs allmählich unbrauchbar wird. Bei Anwendung für Schornsteine mit Niedertemperaturfeuerstätten kann man es dabei in Kauf nehmen, wenn aggressive Feuchte durch Material innerhalb der Fugen durchwandert bzw. durchdiffundiert, da sie zwischen den erfindungsgemäß vorgesehenen Außendichtungen zuverlässig und dauerhaft nach außen hin abgedichtet wird.

Bei hinreichend wandstarken Einzelrohren kann dabei eine in den Fugen angeordnete amorphe Dichtmasse, beispielsweise aus säurefestem Fugenkitt, im erhärteten Zustand die Einzelrohre im vorgegebenen Fugenabstand distanziert halten und dabei auch dem Einzelrohr insgesamt hinreichende statische Festigkeit verleihen. Entsprechendes gilt, wenn im Sinne einer der Parallelanmeldungen innerhalb der Fuge auch noch eine vorgefertigte Fugendichtung einbezogen ist. Bei den erwähnten besonders dünnwandigen Einzelrohren kann man dabei den zusätzlich gewonnenen Raum, der zwischen den Dichtringen einerseits und der Außenfläche des Rauchgasrohres und der Innenfläche der Stützhülse andererseits im Anschluß an die Fuge gewonnen ist, zusätzlich auch noch durch Ausfüllen mit erhärtender amorpher Verfugungsmasse, gegebenenfalls auch unter Einbeziehung vorgefertigter Elemente, so nutzbar machen, daß eine erst nach der Montage aushärtende formstabile Verbindung zwischen den dünnwandigen Einzelrohren erreicht wird.

In Kombination mit Elementen der beiden genannten Parallelanmeldungen kann man ferner darauf verzichten, im eigentlichen Fugenbereich auch schon eine gegen korrosive Feuchte dichte Verbindung herzustellen, da eine solche dichte Verbindung bereits durch die nach der Erfindung vorgesehenen nachgiebigen Dichtringe außerhalb des Rauchgasrohres gewährleistet ist. Man kann daher gegebenenfalls in dem eigentlichen Fugenbereich in Richtung des Kriechweges von innen nach außen aufeinanderfolgende Verfugungskomponenten mit unterschiedlichen Verfugungseigenschaften nach anderen Gesichtspunkten als den der Feuchtigkeitssperre aussuchen oder die Ansprüche an eine erste Feuchtigkeitssperre geringer halten. Dabei lassen sich die nach der Erfindung vorgesehenen Außendichtungen mit größerem Abstand von der Beaufschlagung mit Rauchgas als im Fall der beiden genannten Parallelanmeldungen anordnen.

Wenn an der Stützhülse und/oder an dem Einzelrohr eine formschlüssige Aufnahme, vorzugsweise eine Aufnahmerille, für den jeweiligen Dichtring ausgebildet ist, kann man zunächst die Montage weiter erleichtern, indem man den betreffenden Dichtring an der Stützhülse und/oder an dem Einzelrohr vor der Montage vormontiert.

Besonders hervorzuheben ist der Sonderfall, daß mindestens im Montagezustand die Stützhülse und das Einzelrohr beide in formschlüssigem Eingriff mit dem jeweiligen Dichtring stehen; dann wird durch diese Anordnung mindestens eine zugfeste Verbindung von aneinander anschließenden Einzelrohren gebildet. Eine druckfeste Verbindung schafft man zweckmäßig durch Anordnung einer entsprechenden weiteren druckfesten Fugendichtung innerhalb der Fuge. Beispielsweise aber bei freier Fuge kann die erfindungsgemäße Ausbildung auch noch im Betriebszustand druckfest gegen das Gewicht der jeweils über der Fuge angeordneten Säule des Rauchgasrohres wirken, und zwar insbesondere bei nicht sehr schweren dünnwandigen Einzelrohren, wie sie beispielsweise für die schon angesprochenen Abgasleitungen Verwendung finden können.

Unabhängig von der Möglichkeit einer solchen zug- und gegebenenfalls druckfesten Verbindung kann auch eine Vormontage des Dichtringes zugleich an dem Einzelrohr und an der Stützhülse erfolgen. Das gilt nämlich dann, wenn die Stützhülse jeweils schon an einem Einzelrohr über den betreffenden Dichtring vormontiert und dann das andere Einzelrohr angeschlossen wird, wobei dann der zweite Dichtring auch schon an der Stützhülse oder alternativ an dem nachträglich angeschlossenen Einzelrohr vormontiert sein kann. Im Regelfall wird man dabei die Stützhülse am oberen Ende des im Montagezustand unteren Einzelrohres vormontieren, während aber auch eine Vormontage am unteren Ende des bei der Montage an der Fuge aufgesetzten Einzelrohres möglich ist. Mit anderen Worten kann man die Stützhülse bausatzmäßig jeweils an einem Ende jedes Einzelrohres vormontieren und während der Montage darauf achten, daß die vormontierte Seite vorzugsweise oben gelegen ist.

Das nachträgliche Einführen eines Stützringes oder eines Einzelrohres an einem bereits vormontierten Dichtring läßt sich erleichtern, wenn der formschlüssige Eingriff zwischen Dichtring und Einzelrohr bzw. Stützhülse leicht ein schnappbar ausgebildet ist. Diese Eigenschaft haben insbesondere als O-Ringe ausgebildete Dichtringe. Diese gewährleisten darüber hinaus eine linienartige Anlage, die bei manchen Dichtmaterialien erwünscht ist, insbesondere bei elastisch-nachgiebigen. Aber auch die Verformungsarbeit an nachgiebigen O-Ringen ist gegenüber beispielsweise rechteckartigen Dichtringen kleiner. Wenn derartige O-Ringe nicht zusätzlich formschlüssig umfaßt sind, sondern lediglich eingeklemmt sind, lassen sie sich auch besonders leicht tief eindrücken. Auch haben runde Querschnitte sehr gute Formsteifigkeit gegen radiale Querkräfte und können daher im montierten Zustand die Einzelrohre gut axial fluchtend halten.

Es kommen aber auch andere Querschnitte des Dichtrings grundsätzlich in Frage, insbesondere quadratische oder mit radialer oder axialer Erstreckung rechteckige oder ovale Querschnitte.

Bei Eingriff des Dichtrings an der Stützhülse und/oder an einem Einzelrohr in einer formschlüssigen Aufnahme ist es nicht unbedingt erforderlich, daß diese vollständig ausgefüllt wird. Zum Beispiel braucht der formschlüssige Eingriff nicht bis zum Grund der betreffenden Aufnahme bzw. Aufnahmerille zu reichen. Bevorzugt ist jedoch, daß die Kontur der Aufnahme bzw. der Aufnahmerille komplementär zum eingreifenden Querschnitt des Dichtringes ist, so daß eine vollständige Ausfüllung der Aufnahme erfolgt. Dadurch werden insbesondere die statischen Verbindungseigenschaften verbessert.

Nach einer besonders bevorzugten Weiterbildung ist die Stützhülse mindestens an ihrem einen Ende trichterartig erweitert. Diese Maßnahme kann einerseits dazu ver wendet werden, den Dichtring zwischen dem Einzelrohr und der Stützhülse klemmend einzufangen. Das gilt insbesondere dann, wenn der Dichtring nicht zusätzlich formschlüssig umfaßt wird. Eine solche Klemmwirkung wird dann durch das Gewicht der über der betreffenden Fuge angeordneten Rauchgassäule im montierten Zustand ständig gehalten und verstärkt. Zum anderen kann die trichterartige Erweiterung für eine Vorzentrierung eines Einzelrohres dienen, das auf ein schon teilweise errichtetes Rauchgasrohr aufgesetzt wird. Je nachdem, ob die Stützhülse an dem schon vormontierten Rauchgasrohr oder an dem aufgesetzten Einzelrohr vormontiert ist, wird dann während der Montage ein am oberen oder unteren Ende des betreffenden Einzelrohres vorhandener Zentrierungstrichter wirksam.

Wenn es im Rahmen der Erfindung zugelassen wird, daß korrosive Feuchte bis zu den Dichtringen des erfindungsgemäßen Bausatzes gelangen kann, besteht zweckmäßig die Stützhülse aus korrosionsfestem Material oder ist die Stützhülse mindestens zwischen dem Stützbereich für die Dichtringe korrosionsfest beschichtet. Dies ist vertretbar, da die Stützhülse selbst und die Länge zwischen dem Stützbereich für die Dichtringe eine nur sehr kleine axiale Gesamtausdehnung im Verhältnis zur axialen Länge des gesamten Rauchgasrohres hat. Dieser Effekt wird noch günstiger, wenn man relativ lange Einzelrohre verwendet (vgl. insbesondere Anspruch 30).

Die Ansprüche 9 bis 11 geben bevorzugte Ausführungsformen an.

Der Dichtring kann nach einer in Betracht gezogenen Alternative aus üblichem elastisch-nachgiebigen Material bestehen. Dabei kommen beispielsweise gummielastische Stränge auf Naturkautschuk- oder Kunststoffbasis in Frage, insbesondere für Abdichtung gegen korrosive Feuchte. Wenn es auf Beständigkeit gegen hohe Temperaturen ankommt, kann der Dichtring beispielsweise eine Dichtschnur aus mineralischen oder keramischen Fasern sein. Unter mineralischen Fasern werden dabei insbesondere solche aus Mineralwolle, Steinwolle sowie aus Glas und Quarz in Betracht gezogen. Ein elastisch-nachgiebiger Dichtring hat den Vorteil, daß die Dichtwirkung durch Kompression dauerhaft aufgebaut wird.

Die Erfindung zieht aber auch die Vorformung mindestens eines plastisch-nachgiebigen Dichtringes in Betracht. Dieser kann im Grenzfall nach Art eines Zahnpastastranges frei ausgelegt werden, sofern die Verformung sicherstellt, daß das vorgeformte Material nicht vorzeitig unbestimmt zerquetscht wird oder zerfließt.

Letzteres kann beispielsweise durch ein Stützkorsett verhindert werden, eine Maßnahme, die man im übrigen auch bei elastisch-nachgiebigen Dichtringen zusätzlich anwenden kann. Ein solches Stützkorsett verbessert die Handhabbarkeit des Dichtringes und sichert außerdem die Funktionsfähigkeit selbst dann, wenn das Grundmaterial sehr nachgiebig oder plastisch ist. Verschiedene Möglichkeiten eines solchen Stützkorsetts, die einzeln oder gemeinsam vorgesehen sein können, sind in den Ansprüchen 15 bis 20 und 28 angegeben.

Das im Anspruch 23 angegebene spezielle plastischnachgiebige Material ist dabei unter dem Gesichtspunkt noch relativ hoher Temperaturbeständigkeit ausgewählt. Die Plastizität kann dabei gemäß Anspruch 24 verbessert werden.

Die Ansprüche 25 bis 27 befassen sich mit der Besonderheit, den Dichtring nicht nur mechanisch mit den Einzelrohren bzw. Stützhülsen zu verbinden, sondern zusätzlich auch noch eine chemische Verbindung eingehen zu können, wie es an sich bei Fugenkitten möglich ist.

Im Rahmen des erfindungsgemäßen Bausatzes werden insbesondere einschalige und/oder dünnwandige Einzelrohre einbezogen, insbesondere solche, die aus Schamotte, Keramik, Glas oder Leichtbeton bestehen.

Da die Dichtung primär eine Außendichtung ist, kann man in vielen Fällen die fugenbildenden Stirnflächen der Einzelrohre stumpf ausbilden, wenn man nicht aus anderen Überlegungen andere Formgestaltungen wählt, wie beispielsweise im Hinblick auf zwischen den Einzelrohren zusätzlich einzuschaltende Fugendichtungen.

Das Vormontieren eines Dichtringes auf den Einzelrohren wird durch eine Abkantung gemäß Anspruch 32 erleichtert. Entsprechendes gilt, wenn ein Einzelrohr in einen bereits vormontierten Dichtring bei der Montage eingeschoben wird oder eine Stützhülse, an der bereits ein Dichtring vormontiert ist, auf ein Einzelrohr aufgeschoben wird.

Zweischalige Schornsteine aus einem Rauchgasrohr und einer mit Abstand zu diesem angeordneten Ummantelung sind an sich schon lange bekannt. Bei modernen Schornsteinen hat man sie jedoch durch solche dreischaliger Ausbildung ersetzt, bei denen zwischen dem Rauchgasrohr und der äußeren Stützummantelung noch eine Wärmedämmschicht angeordnet wird. Eine wesentliche Funktion dieser Wärmedämmschicht besteht dabei darin, die Unterschreitung des Taupunktes der im Rauchgas mitgeführten Dämpfe innerhalb des Schornsteins zu verhindern oder zumindest soweit wie möglich in Richtung zur Mündung des Schornsteins in die Atmosphäre zu verlagern. Im Hinblick darauf, daß die Erfindung eine zuverlässige Feuchtigkeitsabdichtung auch gegen aggressive Kondensate innerhalb des Rauchgasrohres sowie eine Diffusionssperre oder -bremse gegen entsprechende aggressive Dämpfe schafft, ermöglicht der erfindungsgemäße Bausatz sogar die Herstellung eines zweischaligen feuchteunempfindlichen Schornsteins aus dem Rauchgasrohr und einer mit Abstand zu diesem angeordneten Ummantelung mit einem Wärmedurchlaßwiderstand des Schornsteins kleiner als 0,65 m²K/W unter Verzicht auf eine gesonderte Wärmedämmschicht, solange diese nur zur Verhinderung einer Taupunktunterschreitung vorgesehen ist. Letzteres ist insbesondere bei Schornsteinen für Niedertemperaturfeuerstätten möglich.

Der erfindungsgemäße Bausatz läßt sich aber auch auf die Herstellung eines mindestens dreischaligen Schornsteins anwenden, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgasrohr, angeordnet ist. Dabei kann von vornherein dem Eindringen von Feuchtigkeit durch die Fugen zwischen den Einzelrohren des Rauchgasrohres in die Wärmedämmschicht ganz oder mindestens teilweise vorgebeugt werden. Dies bietet auch Vorteile dann, wenn zum Abführen von Restfeuchte, die aus den Fugen oder von anderen Orten, z.B. Undichtigkeiten der Einzelrohre, herrührt, der Schornstein in an sich bekannter Weise hinterlüftet ausgebildet ist.

Die Stützhülse kann in allen Ausführungsarten zusätzlich auch noch mit einem radialen Abstandhalter zwischen dem Rauchgasrohr und einer mit radialem Abstand folgenden äußeren Schale, vorzugsweise der Ummantelung eines zweischaligen Schornsteins, ausgebildet sein. Ein solcher radialer Abstandhalter spezieller Formgebung, der jedoch von der Ummantelung getragen ist, ist an sich aus der AT-B 384 263 bekannt.

Die Erfindung wird im folgenden anhand schematischer Zeichnungen an mehreren Ausführungsbeispielen noch näher erläutert.

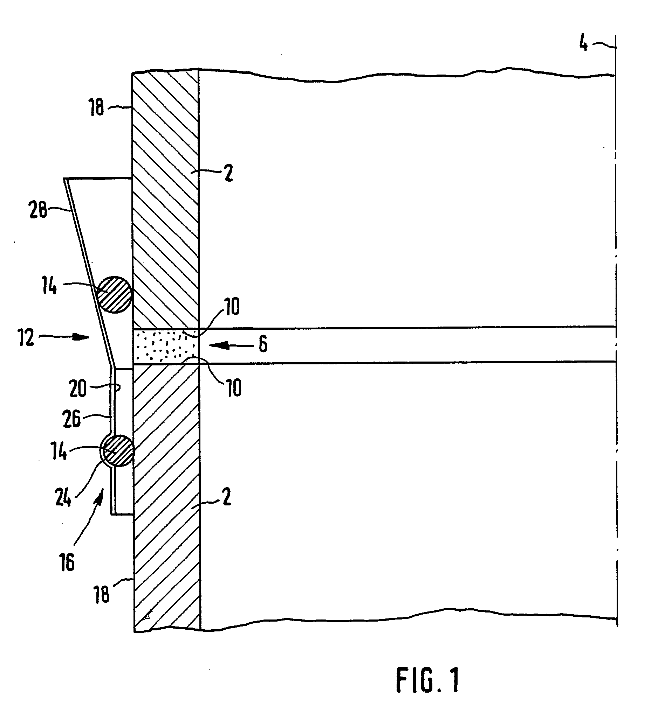

Bei allen Figuren 1 bis 3 wird dabei die Erfindung ausschnittsweise in bereits montiertem Zustand veranschaulicht.

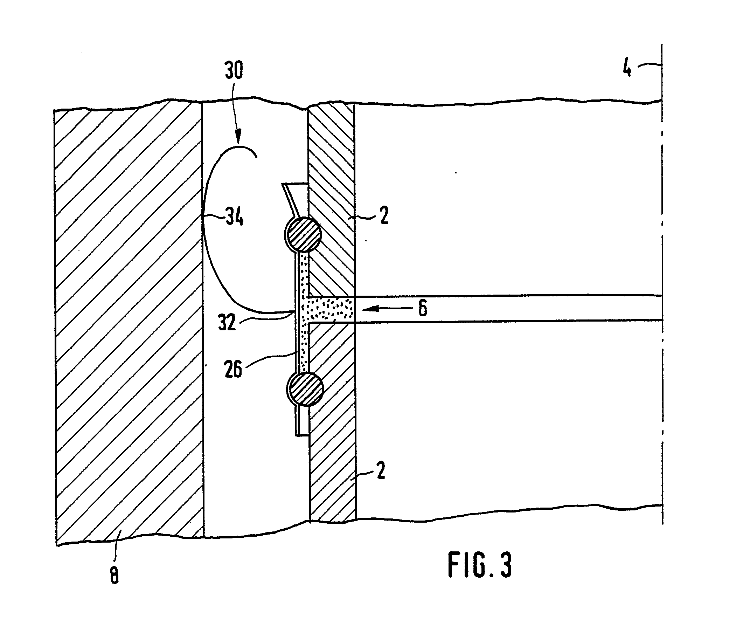

Alle Figuren stellen dabei radiale Halbschnitte durch das Rauchgasrohr im Bereich der eine Fuge bildenden Enden zweier benachbarter Einzelrohre und im Falle von Fig. 3 auch noch eine den dargestellten Bereich umgebende Ummantelung dar.

Der Begriff "radialer Halbschnitt" bezieht sich dabei sinngemäß auf kreisrunde Einzelrohre und auch entsprechend kreisrund verlaufende Außendichtungen des erfindungsgemäßen Bausatzes. Im Falle der auch in Betracht gezogenen Konfigurationen mit nicht kreisrunden Einzelrohren, insbesondere solchen mit streng oder angenähert rechteckigem Querschnitt, ist der Umfangsverlauf der Außendichtungen entsprechend, in den genannten Beispielen also streng oder angenähert rechteckig. In solchen Fällen ist dann der Begriff "radialer Halbschnitt" als Schnittdarstellung rechtwinklig quer zur Wand des betreffenden Einzelrohres oder Rauchgasrohres und im Falle der Darstellung von Fig. 3 der äußeren Ummantelung zu verstehen, wenn auch diese unrund ausgebildet ist.

Die Fig. 1 und 2 beschreiben zwei Ausführungsformen des erfindungsgemäßen Bausatzes von Außendichtungen und Einzelrohren.

Fig. 3 zeigt ferner anhand der zweiten Ausführungsform von Fig. 2 eine weitere Ausbildungsmöglichkeit der Außen dichtung mit einem radialen Abstandhalter gegenüber der mit Abstand zum Rauchgasrohr angeordneten Ummantelung eines vorzugsweise zweischaligen Kamins, bei dem jedoch auch noch mindestens eine weitere nicht dargestellte Schale innerhalb oder außerhalb der Ummantelung vorgesehen sein kann.

Es ist jeweils nur der Anschluß von zwei axial aufeinander folgenden Einzelrohren an einer Fuge mit einer diese umgebenden Außendichtung dargestellt. Die Einzelrohre ergänzen sich dabei axial zu dem Rauchgasrohr eines mehrschaligen Hausschornsteins, dessen weitere Schalen mit Ausnahme der Ummantelung von Fig. 3 sonst nicht dargestellt sind.

Die Ausbildung der Außendichtung mit einem radialen Abstandhalter kann entsprechend auch bei dem ersten Ausführungsbeispiel der Erfindung nach Fig. 1 vorgesehen sein.

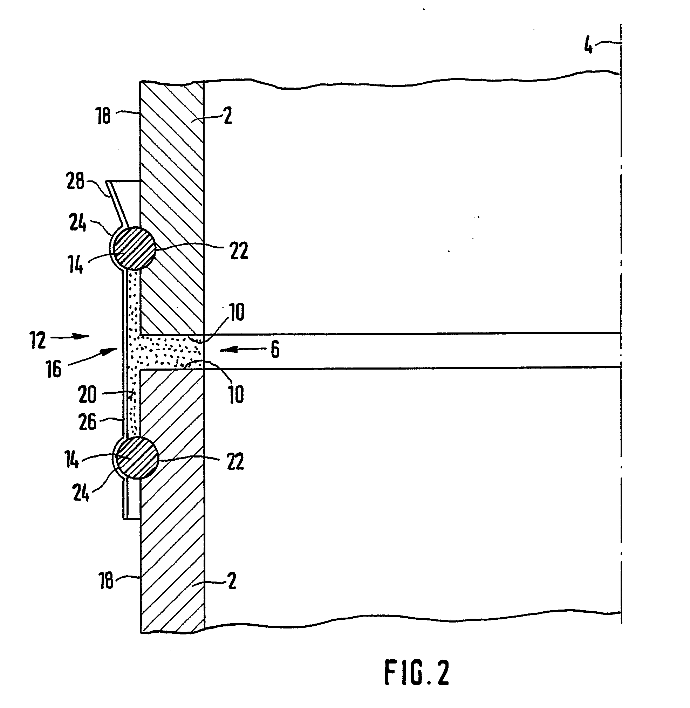

Bei beiden Ausführungsbeispielen der Fig. 1 und 2 ist dabei mindestens im Bereich der Fuge eine diese ausfüllende Fugenverbindung vorgesehen. Die Erfindung sieht jedoch auch solche Ausführungsbeispiele von Außendichtungen und Einzelrohren etwa gemäß den beiden Beispielen der Fig. 1 und 2 in Betracht, bei denen die Fugen zwischen den Einzelrohren offen sind. Auch kann man die Arten der Fugenverbindung zwischen den Ausführungsbeispielen der Fig. 1 und 2 austauschen, also entweder nur zwischen den Fugen oder auch noch in einem außerhalb des Rauchgasrohres gelegenen Raum innerhalb der Außendichtung vorsehen.

Ohne Beschränkung der Allgemeinheit sind insbesondere dünnwandige Einzelrohre 2 vorgesehen, die einschalig aus demselben Material gebildet sind, wie beispielsweise keramischem Material einschließlich Schamotte, Glas oder Quarz, Leichtbeton und gegebenenfalls auch Metall, insbesondere korrosionsfester Stahl.

Die Einzelrohre 2 haben jeweils die strichpunktiert dargestellte gedachte Achse 4 und schließen jeweils an einer Fuge 6 axial aneinander an. Mit der durchlaufenden Darstellung der Achse 4 wird deutlich gemacht, daß die Einzelrohre 2 dabei im Idealfall längs des Rauchgasrohres fluchtend montiert werden. In der Praxis treten jedoch bei der Montage gewisse Fluchtungsfehler auf, die aber durch die nachfolgend noch mehr im einzelnen beschriebene nachgiebige und gelenkartige Ausbildung der Einzeldichtung dichtend, insbesondere feuchtigkeitsdichtend, ausgeglichen werden können.

Die im Bereich einer Fuge 6 aufeinander folgenden beiden benachbarten Einzelrohre 2 sind dabei jeweils mit unterschiedlicher Schrägschraffur dargestellt. Ebenso ist in Fig. 3 die Ummantelung 8 des mehrschaligen, insbesondere zweischaligen, Schornsteins mit Schrägschraffur dargestellt, die hier insbesondere eine Herstellung aus Leichtbeton, gegebenenfalls aber auch aus Stahl oder allen anderen möglichen Materialien von Stützummantelungen eines Schornsteins beschreiben soll. Gegebenenfalls kommen sogar andere Materialien als die einer Stützummantelung in Frage, wenn die äußere Ummantelung 8 nicht die Stützummantelung, sondern eine andere das Rauchgasrohr mit Abstand umgebende Schale des Schornsteins ist, z.B. eine wärmedämmende Schale.

Bei den Ausführungsbeispielen sind ferner die Einzelrohre mit konstanter Wandstärke dargestellt. Das schließt nicht die herstellungsbedingten Toleranzen und gegebenenfalls leicht konischen Formen einer Herstellung in entsprechenden Außen- und Innenformen einer Formvorrichtung aus.

Ohne Beschränkung der Allgemeinheit sind ferner die Fugen 6 von stumpfen Stirnflächen der Einzelrohre begrenzt. Damit wird eine bevorzugte Fugenausbildung verdeutlicht, da ein Großteil der Fugenabdichtung in die Außendichtung verlegt ist und man daher oft mit besonders einfachen Fugengestaltungen auskommen kann. Insbesondere bei den schon erwähnten dünnwandigen Einzelrohren wird dabei auch das Ausbrechen von Stufen in den Stirnflächen vermieden. Dies schließt nicht aus, daß der erfindungsgemäße Bausatz an den Stirnflächen der Einzelrohre auch Profilierungen beliebiger Art an den Einzelrohren einschließen kann, insbesondere auch die Ausbildung als konventionelle Stufenfuge oder mit Abfasungen oder sonstigen Abschrägungen oder Abrundungen an Innen- oder Außenkanten.

Bei beiden Ausführungsbeispielen ist die Außendichtung 12 von je zwei nachgiebigen Dichtringen und Stützhülsen 16 für diese gebildet, deren lichter Innenquerschnitt größer als der von der Außenmantelfläche 18 der Einzelrohre beschriebene Außenquerschnitt der Einzelrohre ist.

Die Dichtringe 14, ihre Stützhülsen 16 und die Einzelrohre 2 sind dabei so relativ zueinander bemessen, daß die Dichtringe 14 unterhalb und oberhalb der Fuge 6 zwischen aufeinander folgenden Einzelrohren 2 zwischen deren Außenmantelfläche 18 und der Stützhülse einklemmbar sind. Diese relative Bemessung der Elemente des erfindungsgemäßen Bausatzes, nämlich der Außendichtungen und der Einzelrohre, ist durch die Darstellung im bereits montierten Zustand besonders anschaulich.

Bei allen Ausführungsbeispielen sind die Dichtringe 14 als O-Ringe ausgebildet. In nicht dargestellter Weise kann man aber auch andere Querschnitte vorsehen einschließlich rechteckiger Querschnitte. Die kreisrunden oder mindestens gerundeten Querschnitte von O-Ringen oder ähnlichen Ringen sind jedoch bevorzugt.

Die Dichtringe 14 sind jeweils mit schräger Gitterschraffur dargestellt. Wenn sie im Rahmen der Erfindung insgesamt als eine plastisch-nachgiebige Verfugungskomponente vorgefertigt sind, wird dabei insbesondere an eine Fertigung aus dem Grundmaterial gedacht, welches in "Gardeners' Chemical Synonymes and Trade Names", 9. Aufl., Gower Technical Press, S. 141, unter dem Stichwort "Butyl Rubber" angesprochen ist. Ansonsten kommen bei allen Ausführungsbeispielen für die Materialien der Dichtringe 14 alle früher schon erörterten elastisch-nachgiebigen und plastisch-nachgiebigen Materialien in Frage.

Bei beiden Ausführungsbeispielen ist ferner die Fuge 6 mit einer amorphen Verfugungsmasse verfüllt, die im Falle des ersten Ausführungsbeispiels der Fig. 1 auch noch den Raum einerseits zwischen den beiden Dichtringen 14 und andererseits zwischen der Außenmantelfläche 18 der Einzelrohre 2 und der Stützhülse 16 teilweise oder ganz ausfüllt. Als Material für diese amorphe Masse wird vorzugsweise säurefester Fugenkitt verwendet, wie er in Römpps Chemie-Lexikon, 7. Aufl., Bd. 5, S. 3038, unter dem Stichwort "Säurekitte" näher spezifiziert ist. Wie erwähnt, kommen aber auch alle anderen mit der Gestaltung der Außendichtung 12 verträglichen Fugenverbindungen, oder aber auch ganz offene Fugen, in Frage. Letzteres gilt dann, wenn die fugenbildenden Stirnflächen 10 der Einzelrohre 2 unmittelbar aufeinander aufgelagert sind oder andere fugenhaltende Mittel vorgesehen sind oder aber die Außendichtung 12 selbst durch formschlüssigen Eingriff mit den Einzelrohren 2 als Abstandhalter für die Fugen wirksam wird. Dies ist bei der zweiten Ausführungsform nach Fig. 2 möglich.

Die Stützhülse 16 ist zweckmäßig, wie dargestellt, aus einem geformten Flachmaterial gebildet oder mit anderen Mitteln entsprechend flach geformt. Beispielsweise besteht sie insgesamt aus korrosionsfestem Stahl oder einem anderen korrosionsfesten Material, gegebenenfalls auch einem nichtmetallischen Material. Mindestens sollte der der Fuge 6 zugewandte Bereich 20 der Stützhülse 16 zwischen den beiden Dichtringen 14 korrosionsfest ausgebildet sein, um der Beaufschlagungsmöglichkeit durch korrosive Feuchte, die vom Rauchgas abgeschieden wird und durch die Fuge 6 zur Innenfläche der Stützhülse 16 gelangt und erst an den Dichtringen gestoppt wird, Rechnung zu tragen.

Das erste Ausführungsbeispiel der Fig. 1 zeigt ferner die Alternative, daß die Einzelrohre an ihrer Außenmantelfläche 18 glatt ausgebildet sind. Alternativ ist gemäß dem zweiten Ausführungsbeispiel nach Fig. 2 jeweils eine umlaufende Aufnahmerille 22 in der Außenmantelfläche 18 der Einzelrohre ausgebildet, die so geformt ist, daß sie den Dichtring mindestens formschlüssig, vorzugsweise komplementär, aufnimmt. In bezug auf die dargestellten O-Ringe ist daher auch der lichte Querschnitt der Aufnahmerillen 22 kreissegmentförmig.

Die Eingriffstiefe ist dabei geringer als der Radius des den jeweiligen Dichtring 14 bildenden O-Rings, vorzugsweise 5 bis 30 % des Radius. Entsprechendes gilt auch dort, wo der Dichtring in Aufnahmerillen 24 an der Stützhülse 16 eingreift, vgl. den im Montagezustand unten gelegenen Dichtring 14 des ersten und beide Dichtringe des zweiten Ausführungsbeispiels. Bezüglich der Bemessungen der Aufnahmerille 24 in bezug auf die Außendichtung 12 gilt das gleiche, was bezüglich der Aufnahmerille 22 am Einzelrohr gesagt worden ist.

Bei beiden Ausführungsbeispielen ist ferner die Stützhülse 16 von einem durchmesserkonstanten Hülsenteil 26 und einem axial anschließenden konischen Zentriertrichter 28 gebildet.

Bei dem zweiten Ausführungsbeispiel erstreckt sich dabei das Hülsenteil 26 axial beidseitig der Fuge 6 und die beiden Aufnahmerillen 24 für die beiden Dichtringe 14 sind noch am Hülsenteil 26 ausgebildet, von dem aus sich der Zentriertrichter 28 im Montagezustand nach oben und außen konisch erweitert. Dabei ist insbesondere gemäß der zeichnerischen Darstellung in Fig. 2 eine relativ kurze axiale Länge des Zentriertrichters 28 vorgesehen, falls man nicht eine axiale Überlänge der Stützhülse 16 in Kauf nehmen will.

Bei dem ersten Ausführungsbeispiel ist demgegenüber der mit gleicher oder vorzugsweise steilerer Neigung ausgebildete konische Zentriertrichter 28 bis in den Bereich der Fuge 6, ja vorzugsweise sogar bis zu deren Unterrand, nach unten gezogen und schließt erst dort an den Hülsenteil 26 an. Dabei ist in diesem Falle der im Montagezustand obere Dichtring 14 nicht wie in den anderen Fällen der beiden Ausführungsbeispiele in einer Aufnahmerille 24 aufgenommen, sondern direkt an einer glatten Fläche des Zentriertrichters 28 etwa dort zwischen der Stützhülse 16 und der Außenmantelfläche 18 der Einzelrohre eingeklemmt, wo sich der Zentriertrichter bereits etwa um das Eingriffsmaß eines Dichtrings 14 in einer Aufnahmerille 24 der Stützhülse 16 gegenüber deren Hülsenteil 26 erweitert hat.

Bereits der Hülsenteil 26 hat einen solchen Abstand gegenüber der Außenmantelfläche 18 der Einzelrohre 2, daß in jedem Falle eine nachgiebige Einklemmung der Dichtringe 14 zwischen der Stützhülse 16 und der Außenmantelfläche 18 der Einzelrohre gewährleistet ist und außerdem zwischen den Dichtringen 14 einerseits und der Stützhülse 16 und der Außenmantelfläche 18 der Einzelrohre 2 andererseits ein Zwischenraum gebildet wird, der im Sinne der Fig. 2 mit amorpher Verfugungsmasse áuffüllbar ist, insbesondere dem schon erwähnten Säurekitt. Dieser kann dann insbesondere auch bei sehr dünnen Wandstärken der Einzelrohre 2 im erhärteten Zustand noch eine die Baustatik verbessernde starre Verbindung bilden.

Eine druckfeste Verbindung zwischen den Einzelrohren 2 im Bereich der Fuge 6 kann beispielsweise durch erhärtenden säurefesten Fugenkitt gewährleistet werden cder durch gesondert vorgesehene Distanziermittel. Bei dem zweiten Ausführungsbeispiel, bei dem die Stützhülse 16 über die Dichtringe 14 formschlüssig mit den beiden fugenbildenden Einzelrohren 2 verbunden ist, kann dabei zusätzlich zu einer dadurch auch möglichen Distanzhalterwirkung noch eine zugfeste Verbindung erreicht werden.

Die Dichtringe 14 und die Stützhülsen 16 verlaufen entsprechend dem Umfangsverlauf der Außenmantelfläche 18 der Einzelrohre äquidistant ringförmig um diese und haben dabei vorzugsweise einen in Umfangsrichtung gleichbleibenden Querschnitt.

Die Wandstärke der Einzelrohre 2 ist an sich beliebig. Es wurde jedoch bereits erwähnt, daß die Erfindung besonders bausatzmäßig in Anwendung auf dünnwandige oder gar sehr dünnwandige Einzelrohre vorteilhaft einsetzbar ist. Die Erfindung ist auch bei Standardwandstärken im Bereich von 10 bis 50 mm einsetzbar, während vorzugsweise Wandstärken zwischen 5 und 10 mm, höchstvorzugsweise sogar zwischen 0,5 und 5 mm, in Betracht gezogen werden, so daß die Erfindung von besonderer Bedeutung im Bereich von Wandstärken zwischen 0,5 bis 10 mm ist.

In Fig. 3 ist ohne Beschränkung der Allgemeinheit dargestellt, daß die Außendichtung 12 noch eine Zusatzfunktion als radialer Abstandhalter gegenüber einer radial anschließenden Schale, insbesondere der Ummantelung 8 eines zweischaligen Schornsteins, erfüllen kann. Der Abstandhalter 30 geht dabei in Fig. 3 von einer mittleren Außenzone 32 der Stützhülse 16 aus, die wegen der Anlehnung an das zweite Ausführungsbeispiel von deren Hülsenteil 26 gebildet ist. Bei Übertragung der Erfindungsidee auf das erste Ausführungsbeispiel, und bei gleicher Höhe der Anbringung des Abstandhalters 30, könnte diese beim ersten Ausführungsbeispiel sogar noch von einer entsprechenden Außenzone des Zentriertrichters 28 ausgehen.

Der Abstandhalter 30 erstreckt sich dabei nach oben zu einer in bezug auf die Fuge 6 höher gelegenen Anlagezone 34 an der Ummantelung 8. Es besteht jedoch auch die manchmal sogar bevorzugte Alternative, den Abstand halter nach unten mit in bezug auf die Fuge niedriger liegende Anlagezone 34 zu orientieren. Der Abstandhalter 30 ist vorzugsweise ein Federelement, das hier in bevorzugter Gestalt etwa C-förmig dargestellt ist. Zweckmäßig sind dabei mehrere der artige Abstandhalter mit nicht zu großer Umfangserstreckung ber den Umfang der Stützhülse 16 verteilt. Sie können beispielsweise aus Federstahlbändern bestehen und können in jeder für den Fachmann bekannten geeigneten Weise, z.B. durch Punktschweißen eines winkelförmigen Fußteils, mit der Stützhülse 16 fest verbunden sein.

Es ist dabei nicht zwingend erforderlich, daß der Abstandhalter 30 in Höhe der Fuge mit der Stützhülse 16 verbunden ist. Beispielsweise könnte man ihn auch so anordnen, daß er einen tiefer liegenden Fußpunkt an der Stützhülse 16 hat und sich im wesentlichen über dieselbe axiale Länge wie die ganze Stützhülse 16 selbst erstreckt. Entsprechendes gilt analog für einen höher liegenden Fußpunkt bei Erstreckung des Abstandhalters 30 von der Stützhülse 16 nach unten.

Es ist allgemein zweckmäßig, wenn die Stützhülsen und die Dichtringe jeweils aus einem Stück bestehen und ringartig geschlossen umlaufend, vorzugsweise mit gleichbleibendem Querschnitt,ausgebildet sind.

Die - bei Kreisringdichtungen radiale - Breite des umlaufenden Strangs der Dichtringe beträgt vorzugsweise 5 bis 12 mm. Ihre axiale Stärke wird vorteilhaft etwa gleich wie ihre genannte Breite gewählt.

Der Abstand zwischen dem Hülsenteil 26 und der Außenmantelfläche 18 der Einzelrohre 2 beträgt vorzugsweise 2 bis 5 % des Außendurchmessers von runden Einzelrohren bzw. der größten Außenabmessung im Sinne der Beschreibung rechteckiger Querschnitte (Länge und Breite, nicht Diagonale).

**Ansprüche**

1. Bausatz aus Einzelrohren (2) und Außendichtungen (12) zur Herstellung eines Rauchgasrohres eines mehrschaligen Schornsteins aus den sich zum Rauchgasrohr axial ergänzenden Einzelrohren (2) und Außendichtungen (12), welche die Fugen (6) zwischen den Einzelrohren (2) überbrücken, dadurch **gekennzeichnet,** daß die Außendichtungen (12) nachgiebige Dichtringe (14) und Stützhülsen (16) für diese aufweisen, deren lichter Innenquerschnitt größer als der Außenquerschnitt der Einzelrohre (2) ist und daß die Dichtringe (14), ihre Stützhülsen (16) und die Einzelrohre (2) so relativ zueinander bemessen sind, daß die Dichtringe (14) unter-und oberhalb der Fuge (6) zwischen aufeinander folgenden Einzelrohren (2) zwischen deren Außenmantelfläche (18) und der Stützhülse (16) deeinklemmbar sind.

2. Bausatz nach Anspruch 1, dadurch gekennzeichnet, daß an der Stützhülse (16) und/oder an dem Einzelrohr (2) eine formschlüssige Aufnahme, vorzugsweise eine Aufnahmerille (22;24), für den jeweiligen Dichtring (14) ausgebildet ist.

3. Bausatz nach Anspruch 2, dadurch gekennzeichnet, daß die Kontur der Aufnahme bzw. Aufnahmerille (22;24) komplementär zum eingreifenden Querschnitt des Dichtringes (14) ist.

4. Bausatz nach einem der Ansprüche 1 bis 3, dadurch gekennzeichnet, daß ein Dichtring (14), vorzugsweise beide, am Einzelrohr (2), an der Stützhülse (16), zwischen beiden (2,16) oder teils am Einzelrohr (2), teils an der Stützhülse (16) vormontiert ist bzw. sind.

5. Bausatz nach einem der Ansprüche 1 bis 4, dadurch gekennzeichnet, daß die Dichtringe (14) O-Ringe sind.

6. Bausatz nach einem der Ansprüche 1 bis 5, dadurch gekennzeichnet, daß die Stützhülse (16) mindestens an ihrem einen Ende trichterartig (28) erweitert ist.

7. Bausatz nach Anspruch 6, dadurch gekennzeichnet, daß mindestens ein Dichtring (14) an einer trichterartigen Erweiterung (28) abgestützt ist.

8. Bausatz nach einem der Ansprüche 1 bis 7, dadurch gekennzeichnet, daß die Stützhülse (16) aus korrosionsfestem Material besteht oder mindestens in einem Bereich (20) zwischen den Stützzonen (24) für die Dichtringe (14) korrosionsfest beschichtet ist.

9. Bausatz nach Anspruch 8, dadurch gekennzeichnet, daß die Stützhülse (16) aus korrosionsfestem Metall, vorzugsweise nichtrostendem Stahl, besteht.

10. Bausatz nach Anspruch 8, dadurch gekennzeichnet, daß die Stützhülse (16) mit keramischem Material beschichtet ist.

11. Bausatz nach Anspruch 8, dadurch gekennzeichnet, daß die Stützhülse (16) mit einem hochtemperaturbeständigen Kunststoff, vorzugsweise Polytetrafluoräthylen, beschichtet ist.

12. Bausatz nach einem der Ansprüche 1 bis 11, dadurch gekennzeichnet, daß mindestens ein Dichtring (14) aus elastischnachgiebigem Material besteht.

13. Bausatz nach einem der Ansprüche 1 bis 12, dadurch gekennzeichnet, daß mindestens ein Dichtring 14 aus plastischnachgiebigem Material besteht.

14. Bausatz nach einem der Ansprüche 1 bis 13, dadurch gekennzeichnet, daß mindestens ein Dichtring (14) von einem Stützkorsett gehalten ist.

15. Bausatz nach Anspruch 14, dadurch gekennzeichnet, daß das Stützkorsett einen im Stützring (14) eingebetteten Tragkörper aufweist.

16. Bausatz nach Anspruch 14 oder 15, dadurch gekennzeichnet, daß das Stützkorsett eine den jeweiligen Dichtring (14) durchziehende Stützstruktur aufweist.

17. Bausatz nach Anspruch 16, dadurch gekennzeichnet, daß die Stützstruktur eine beigemengte Fasermatrix aufweist.

18. Bausatz nach einem der Ansprüche 14 bis 17, dadurch gekennzeichnet, daß das Stützkorsett eine den jeweiligen Dichtring (14) umschließende, vorzugsweise luftdurchlässige, Hülle ist.

19. Bausatz nach Anspruch 18, dadurch gekennzeichnet, daß die Hülle für in ihr angeordnete nachgiebig-plastische Dichtmasse durchlässig bzw. für in ihr angeordnete elastischnachgiebige Dichtmasse bei Kompression durchdringbar ausgebildet ist.

20. Bausatz nach einem der Ansprüche 14 bis 19, dadurch gekennzeichnet, daß das Stützkorsett von einem den jeweiligen Dichtring (14) formschlüssig umschließenden Bereich (22,24) der Stützhülse (16) und/oder des Einzelrohres (2) gebildet ist.

21. Bausatz nach einem der Ansprüche 1 bis 20, dadurch gekennzeichnet, daß mindestens ein Dichtring (14) von einer Dichtschnur aus mineralischen oder keramischen Fasern gebildet ist.

22. Bausatz nach einem der Ansprüche 1 bis 21, dadurch gekennzeichnet, daß mindestens ein Dichtring (14) von einem gummielastischen Strang auf Naturkautschuk- oder Kunststoffbasis gebildet ist.

23. Bausatz nach einem der Ansprüche 1 bis 22, dadurch gekennzeichnet, daß mindestens ein Dichtring (14) von einem plastisch-nachgiebigen Strang auf Naturkautschuk-oder Kunststoffbasis, vorzugsweise auf Basis eines Copolymers von Isobutylen mit einem kleinen prozentualen Anteil an Dien, vorzugsweise Butadien, gebildet ist.

24. Bausatz nach Anspruch 23, dadurch gekennzeichnet, daß der Strang mit mineralischen, vorzugsweise silikathaltigen, Füllstoffen versehen ist.

25. Bausatz nach einem der Ansprüche 1 bis 24, dadurch gekennzeichnet, daß mindestens ein Dichtring (14) mit einem Zusatz versehen ist oder aus einem Material besteht, das sich bei Hinzufügung eines Aktivators mit dem Material der Einzelrohre (2) chemisch verbindet.

26. Bausatz nach Anspruch 25, dadurch gekennzeichnet, daß der Zusatz oder das Material ein säurefester Kitt und der Aktivator Wasser oder Wasserglas ist.

27. Bausatz nach Anspruch 25 oder 26, dadurch gekennzeichnet, daß das Material als Pulver oder Granulat von einer durchlässigen Hülle - vorzugsweise einem Gewebe, Gewirke oder Gestricke - gehalten ist.

28. Bausatz nach einem der Ansprüche 14 bis 27, dadurch gekennzeichnet, daß das Stützkorsett aus Metall, vorzugsweise nichtrostendem Stahl oder Aluminium, Kunststoff, vorzugsweise Polytetrafluoräthylen, oder Carbon-, Keramik- oder Mineralfasermaterial besteht.

29. Bausatz nach einem der Ansprüche 1 bis 28, dadurch gekennzeichnet, daß die Einzelrohre (2) einschalige und/oder dünnwandige Rohre, insbesondere aus Schamotte, Keramik, Glas oder Leichtbeton sind.

30. Bausatz nach einem der Ansprüche 1 bis 29, dadurch gekennzeichniet daß die Einzelrohre (2) jeweils eine Länge von mehr als 75 cm, vorzugsweise etwa 1 m, haben.

31. Bausatz nach einem der Ansprüche 1 bis 30, dadurch gekennzeichnet, daß die fugenbildenden Stirnflächen (10) der Einzelrohre (2) stumpf ausgebildet sind.

32. Bausatz nach einem der Ansprüche 1 bis 31, dadurch gekennzeichnet, daß die Stirnflächen (10) der Einzelrohre (2) abgekantet, vorzugsweise abgeschrägt, ausgebildet sind.

33. Bausatz nach einem der Ansprüche 1 bis 32, dadurch gekennzeichnet, daß die Stützhülse (16) mit einem radialen Abstandhalter zwischen dem Rauchgasrohr und einer mit radialem Abstand (30) folgenden äußeren Schale, vorzugsweise der Ummantelung (8) eines zweischaligen Schornsteins, ausgebildet ist.

34. Anwendung des Bausatzes nach einem der Ansprüche 1 bis 33 auf die Herstellung von Abgasleitungen, die im Inneren mit Überdruck beaufschlagt werden.

35. Anwendung eines Bausatzes nach einem der Ansprüche 1 bis 33 oder Anwendung nach Anspruch 34 für einen zweischaligen Schornstein aus dem Rauchgasrohr und einer mit Abstand zu diesem angeordneten Ummantelung (8) mit einem Wärmedurchlaßwiderstand des Schornsteins kleiner als 0,65 m²K/W.

36. Anwendung eines Bausatzes nach einem der Ansprüche 1 bis 33 oder Anwendung nach Anspruch 34 oder 35 in Verbindung mit einer in den Fugen (6) zwischen den Einzelrohren (2) angeordneten zusätzlichen Fugendichtung.

37. Anwendung nach Anspruch 36 mit der Maßgabe, daß die Fugendichtung auch noch den Raum zwischen den montierten Dichtringen (14) einerseits sowie dem Rauchgasrohr und der Stützhülse (16) andererseits mindestens teilweise erfüllt.

38. Anwendung eines Bausatzes nach einem der Ansprüche 1 bis 33 oder Anwendung nach einem der Ansprüche 34, 36 oder 37 auf die Herstellung eines mindestens dreischaligen Schornsteins, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgasrohr, angeordnet ist.

39. Anwendung nach Anspruch 38 mit der Maßgabe, daß der Schornstein hinterlüftet ausgebildet ist.

FIG. 1

FIG. 2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 418 068 (VON ROLL AG) * Seite 1, Zeile 41 - Seite 2, Zeile 96; Figur 2 * | 1 | E 04 F 17/02 F 16 L 13/10 F 23 J 13/04 |
| A | | 4,5,12, 22,31, 36,37 | |
| | --- | | |
| Y | DE-U-8 606 323 (KRAUSS KAMINWERKE MÜNCHEN-GEISELBULLACH GmbH & CO. KG) * Seite 2, Zeilen 11-35; Seite 6, Zeile 3 - Seite 11, Zeile 26; Figuren 1-9 * | 1 | |
| A | | 2,3,8, 12,29, 31,33, 35,36, 38,39 | |
| | --- | | |
| A | FR-A- 617 206 (SOCIETE GENERALE ET UNIQUE DES CIMENTS DE LA PROTE DE FRANCE) * Seite 1, Zeile 9 - Seite 2, Zeile 40; Figuren 1-6 * | 1-5,12, 20,31, 37 | |
| | --- | | **RECHERCHIERTE SACHGEBIETE (Int. Cl.5)** |
| D,A | DE-A-3 317 661 (STETTNER & CO.) * Seite 2, Zeile 4 - Seite 4, Zeile 32; Seite 5, Zeile 13 - Seite 6, Zeile 10; Figur 1 * | 1,6,7, 14,20, 24,28, 29,31, 36 | E 04 F F 16 L F 23 J F 16 J |
| | --- | | |
| A | DE-U-8 508 131 (VAHLBRAUK) * Seite 3, Zeile 8 - Seite 10, Zeile 21; Figur * | 1,9,12, 17,20- 22,29, 30,31, 33,36, 38,39 | |
| | ---       -/- | | |

Der vorliegende Recherchenbericht wurde für alle Patentansprüche erstellt

| Recherchenort | Abschlußdatum der Recherche | Prüfer |
|---|---|---|
| DEN HAAG | 06-11-1989 | AYITER J. |

**Europäisches
Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 917 285  (SWANSON) <br> * Spalte 3, Zeile 1 - Spalte 4, Zeile 17; Figuren 1-7 * <br> --- | 1,14,18 -20,24- 28 | |
| A | US-A-1 823 974  (FERGUSON) <br> * Seite 1, Zeile 61 - Seite 3, Zeile 9; Figuren 1-9 * <br> --- | 1,14,18 ,20,24, 27 | |
| A | FR-A-2 089 293  (STEWING KUNSTSTOFFBETRIEB GmbH) <br> --- | | |
| A | CH-A-  260 688  (MOTOR-COLUMBUS AG) <br> ----- | | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 06-11-1989 | AYITER J. |

EPO FORM 1503 03.82 (P0403)